# EUROPÄISCHE PATENTANMELDUNG

(11) **EP 0 812 778 A1**
(43) Veröffentlichungstag der Anmeldung: **17.12.1997**
(21) Anmeldenummer: 97110680.2
(22) Anmeldetag: 04.08.1993
(51) Int. Cl.: B65D 65/40, B65D 85/10

(54) **Zigarettenverpackung aus Kunststoffolie**

(30) Priorität: 12.08.1992 DE 4226640
(62) Teilanmeldung aus: 93112470.5
(71) Anmelder: HOECHST AKTIENGESELLSCHAFT, 65929 Frankfurt am Main (DE)
(72) Erfinder: Thören, Klaus, 65203 Wiesbaden (DE); Kromer, Horst, 65187 Wiesbaden (DE); Aey, Ruth, 65201 Wiesbaden (DE)

(57) **Zusammenfassung**

Zigarettenverpackung welche mit einer Einrichtung versehen ist, welche ein auf der Packung außen aufliegendes Band aus thermoplastischem Kunststoff sowie einen Anfaßzipfel am Ende dieses Bandes umfaßt, wobei das Band fixiert ist und über eine Sollreißstelle in der die Packung bildende Folie läuft, die an der zur Öffnung vorgesehenen Stelle angebracht ist.

## Beschreibung

Die vorliegende Erfindung betrifft eine Zigaretten-Weichpackung.

Es ist bekannt, Zigaretten in Verpackungen anzubieten, welche mehrere Umhüllungen aus verschiedenen Materialien umfassen, im allgemeinen ein Papier-Aluminium-Verbund, eine Papierbanderole oder Karton und eine Folie als äußere Umhüllung. Diese Verpackung erfüllt gleichzeitig mehrere Funktionen, welche speziell für Zigarettenverpackungen gefordert bind. Hierzu zählen unter anderem gute Wasserdampf- und Gasbarriereeigenschaften, wodurch die Zigaretten vor Austrocknung und Aromaeinbußen geschützt werden sollen. Aber auch eine gute Handhabbarkeit der Verpackung ist durch eine spezielle Aufreißvorrichtung gewährleistet.

Diese herkömmlichen Verpackungen benötigen jedoch mehrstufige automatische Systeme, welche die Zigaretten in die einzelnen Lagen einschlagen. Damit ist grundsätzlich ein erheblicher Arbeits- und Kostenaufwand verbunden, dessen Reduzierung ein stetes Bedürfnis ist.

Mit der fortschreitenden Entwicklung recyclingfähiger Verpackungssysteme besteht ein wachsendes Bedürfnis nach Einstoffverpackungen, deren Wiederverwertung grundsätzlich einfacher ist. In dieser Hinsicht sind alle bekannten Zigarettenverpackungen stark verbesserungsbedürftig.

Es bestand daher die Aufgabe, eine Zigarettenverpackung zur Verfügung zu stellen, welche die Nachteile der herkömmlichen Verpackung vermeidet. Insbesondere soll eine Zigaretteneinstoffverpackung zur Verfügung gestellt werden, die die funktionalen Anforderungen gut erfüllt, d. h. gute Barriereeigenschaften, gute mechanische Festigkeit, gute thermische Beständigkeit etc. aufweist.

Gleichzeitig soll die Verpackung gut zu handhaben, insbesondere gut zu öffnen sein. Außerdem ist darüber hinaus ein gutes optisches Erscheinungsbild der Verpackung gefordert. Letztlich soll die Verpackung dennoch preiswert herzustellen und somit wirtschaftlich vorteilhaft sein.

Diese Aufgabe wird gelost durch eine Zigarettenverpackung, welche dadurch gekennzeichnet ist, daß sie im wesentlichen Folie aus thermoplastischem Kunststoff umfaßt.

As Folien aus thermoplastischem Kunststoff sind insbesondere Polypropylenfolien bevorzugt, wobei grundsätzlich alle bekannten einschichtigen und mehrschichtigen Polypropylenfolientypen in Frage kommen. Insbesondere sind opake Folien bevorzugt. Solche opaken Folien sind an sich bekannt und werden ausführlich in EP-A-0 244 614, EP-B-0 044 515, EP-A-0 475 110 und EP-A-0 408 971 beschrieben. In der Regel umfassen sie eine Polypropylenbasisschicht, welche einen Zusatz von unverträglichen anorganischen oder organischen Teilchen enthält. Diese unverträglichen Teilchen erzeugen beim Verstrecken der Folie vakuolenartige Leerräume in der polymeren Matrix, die im Licht den optischen Effekt 'Opazität' verursachen. Bevorzugte Zusatzstoffe sind anorganische Salze wie beispielsweise CaCO₃ und kugelförmige organische Teilchen. Einzelheiten über Art, Größe und Menge sind in den genannten Schriften detailliert beschrieben.

Bevorzugt weisen die eingesetzten Opakfolien eine oder mehrere Deck- und/oder Zwischenschichten auf, die nach den für die Verpackung geforderten Eigenschaften ausgewählt werden. Geeignete Deckschichtmaterialien umfassen Polypropylenhomopolymere sowie übliche Polypropylencopolymere, beispielsweise C₂/C₃- oder C₃/C₄-Copolymere, oder Propylenterpolymere wie beispielsweise C₂/C₃/C₄-Terpolymere. Bevorzugt sind ebenfalls Mischungen aus zwei oder mehreren der genannten Homo-, Co- und Terpolymeren.

Der Basisschicht bzw. den Deck- und/oder Zwischenschichten könnnen übliche Additive in jeweils wirksamen Mengen zugesetzt sein. Hierunter werden insbesondere Pigmente, Stabilisatoren, Neutralisationsmittel, Harze, Antiblockmittel und Antistatika verstanden. Auch hierzu findet man Einselheiten über günstige Ausführungsformen im genannten Stand der Technik.

Neben den opaken Folien sind auch transparente Folientypen geeignet. Solche werden im Stand der Technik beschrieben. Diese Folien sind ein- oder mehrschichtig aufgebaut und umfassen ganz allgemein eine Kernschicht auf Polypropylenbasis. Die Deckschichten entsprechen gegebenenfalls denen im Zusammenhang mit opaken Folien beschriebenen. Grundsätzlich sind alle allgemein bekannten Schichtstrukturen wie in den genannten Schriften beschrieben geeignet.

Die Dicke der Folie kann innerhalb weiter Grenzen variieren und beträgt mindestens 20 µm, bevorzugt 50 bis 200 µm, insbesondere bevorzugt 70 bis 100 µm, wobei die Basisschicht etwa 50 bis 80 % der Gesamtfoliendicke ausmacht.

Zur Verbesserung der Hafteigenschaften können die Oberflächen der Folie corona- oder flammbehandelt werden, wobei gegebenenfalls die entsprechende Behandlung einer Oberfläche ausreicht. Corona- und Flammbehandlungen sind an sich bekannt und beispielsweise in EP-B-0 160 889 und EP-B-0 281 893 beschrieben.

In einer besonders vorteilnaften Ausführungsform wird die Zigarettenverpackung aus Folie aus thermoplastischem Kunststoff mit einer Einrichtung zum Öffnen versehen, welche selbst ebenfalls Gegenstand der vorliegenden Erfindung ist.

Es ist bekannt, daß Polypropylenfolien hohe Einreißfestigkeit, aber gleichzeitig niedrige Weiterreißfestigkeit aufweisen. Dadurch ist das Öffnen dieser Verpackungen ohne zusätzliche Hilfsmittel oft problematisch. Zunächst läßt sich die Pakkung an keiner Stelle in einfacher Weise aufreißen, aber dann reißt die Einrißstelle unkontrolliert weiter, so daß unerwünschte, viel zu große Öffnungen entstehen und der Inhalt unkontrolliert herausfällt. Insbesondere für Zigarattenverpackungen ist es wichtig, daß diese lediglich so weit geöffnet werden, daß noch nicht verbrauchte Zigaretten darin aufbewahrt werden können, ohne daß sie allzu leicht herausfallen. Aufreißbänder, wie sie an herkömmlichen Verpackungen angebracht sind, führen zu genau dam oben beschriebenen unkontrollierten Aufreißen und sind daher für die Einstoffverpackung aus thermoplastischer Kunststoffolie ungeeignet.

Es bestand daher die weitere Aufgabe, eina Möglichkeit zum Öffnen von Verpackungen aus Folien aus thermoplastischem Kunststoff zur Verfügung zu stellen, welche die oben beschriebenen Nachteile nicht aufweist.

Diese Aufgabe wird gelost durch eine Öffnungsvorrichtung, welche ein auf der Packung außen aufliegendes Band aus thermoplastischem Kunststoff sowie einen Anfaßzipfel am Ende dieses Bandes umfaßt, wobei das Band über eine Solleinreißstelle in der die Packung bildande Folie läuft, die an der zur Öffnung vorgesehenen Stelle angebracht ist.

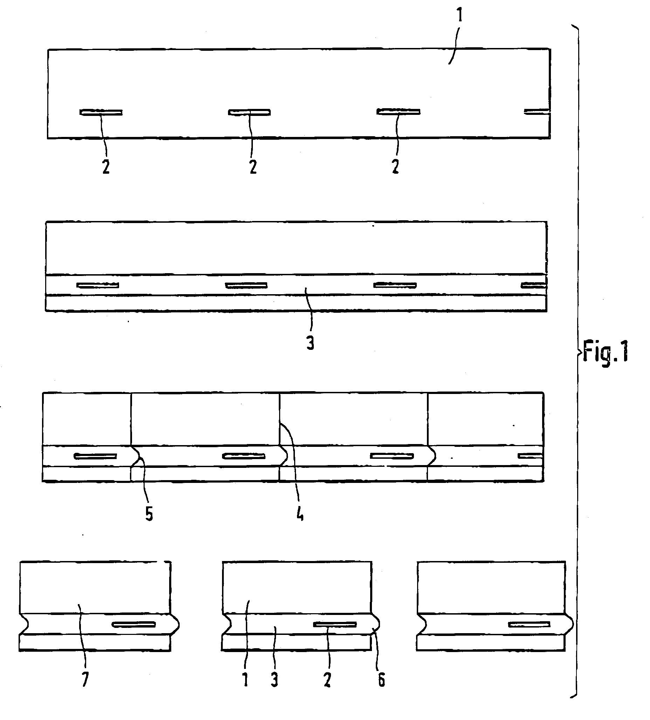

Die Öffnungsvorrichtung ist in den Abbildungen 1 bis 4 dargestellt und wird im folgenden erläutert.

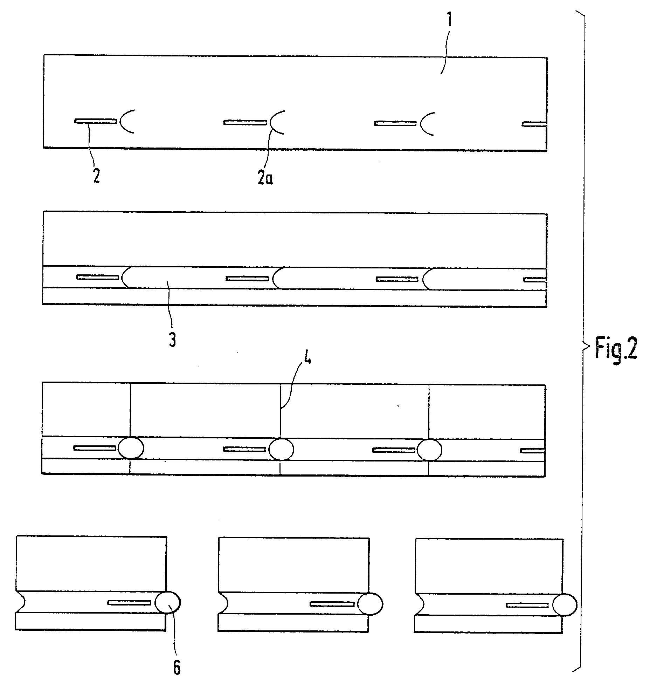

Abbildungen 1 und 2 zeigen die Herstellung des Zuschnitts für eine Zigarettenverpackung. An geeigneter Stelle wird die Folie 1 in Längsrichtung mit Sollreißstellen 2 versehen, insbesondere mit einem Schlitz oder einar Perforierung. Über diesen Schlitz wird ein Band 3 aus thermoplastischem Kunststoff gelegt und fixiert. Zur Fixierung ist entweder eine Siegelung geeignet oder man verwandet ein sogenanntes Selbstklebeband mit einer haftvermittelnden Beschichtung. Die Folienseite, auf welche das Band aufgelegt wird, bildet später die Außenseite der Verpackung. Dann werden die einzelnen Zuschnitte im jeweiligen geeigneten Abstand voneinander geschnitten, wobei die Schnittkante 4 nicht einfach geradlinig ist, sondern beispielsweise den in der Abbildung 1 dargestallten Verlauf zeigt. Der angedeutete U-förmige Anschnitt 5 bildet später den Anfaßzipfel 6 und kann auch eine andere geeignete Form haben. Auf diese Weise erhält man die dargestellten Zuschnitte 7 mit Solleinreißstelle 2 und aufgelegtem und fixiertem Band 3, welche direkt zum Einschlagen der Zigaretten verwendet werden können.

Abbildung 2 zeigt eine weitere besonders vorteilhafte Ausführungsform für den Zuschnitt, welche eine noch günstigere Gestaltung des Anfaßzipfels beinhaltet. Hierzu wird gleichzeitig mit oder vor oder nach dam Schlitzen bzw. Perforieren der Folie 1, aber vor dem Auflegen des Bandes 3 eine U-förmige Stanzung 2a in Höhe der späteren Schnittkante vorgenommen. Diese U-förmige Stanzung 2a ergänzt sich mit der Form der Schnittkante 4 zu einem ovalen oder kreisförmigen Zipfel 6, welcher besonders vorteilhaft ist, da er die doppelte Größe bietet und damit leichter zu ergreifen ist.

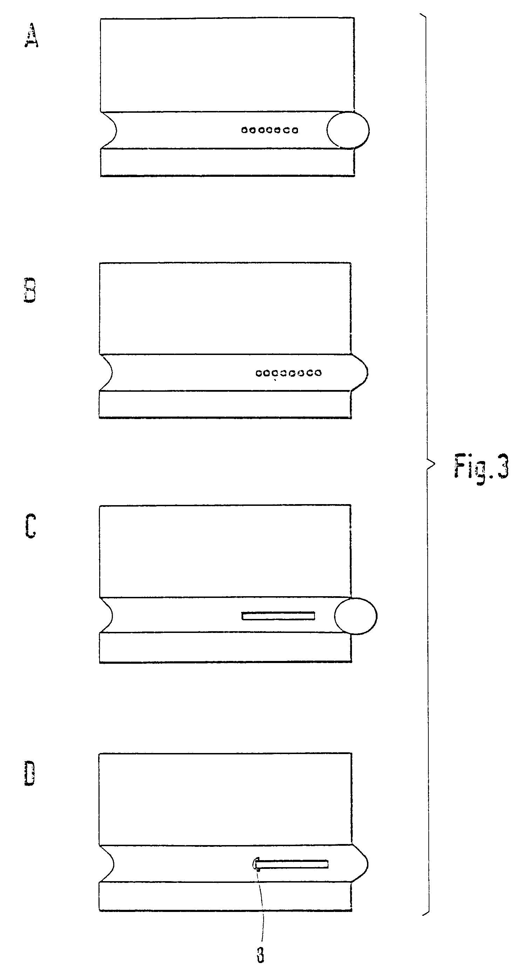

In einer besonders vorteilhaften Ausführungsform wird der Schlitz am oberen und unteren Ende durch geeignete Maßnahmen fixiert, um das unerwünschte Weiterreißen noch effektiver zu verhindern. Beispielsweise versieht man die Schnittenden mit einer Rundlochung oder mit einem halbkreisförmigen Schmelzwulst 8 wie in Abbildung 3 dargestellt.

Abbildung 3 zeigt Zuschnittmodelle A bis D, wie sie sich aus den verschiedenen Ausführungsformen der Erfindung ergeben. A und B stellen jeweils einen Zuschnitt mit einer Perforierung als Solleinreißstelle dar und einen ovalen oder U-förmigen Anfaßzipfel. C und D sind Zuschnitte mit einem Schlitz als Solleinreißstelle, der zusätzlich mit einem Schmelzwulst versehen ist. Auch hier sind wieder verschiedene Ausgestaltungen mit rundem oder U-förmigem Anschnitt als Anfaßzipfel möglich.

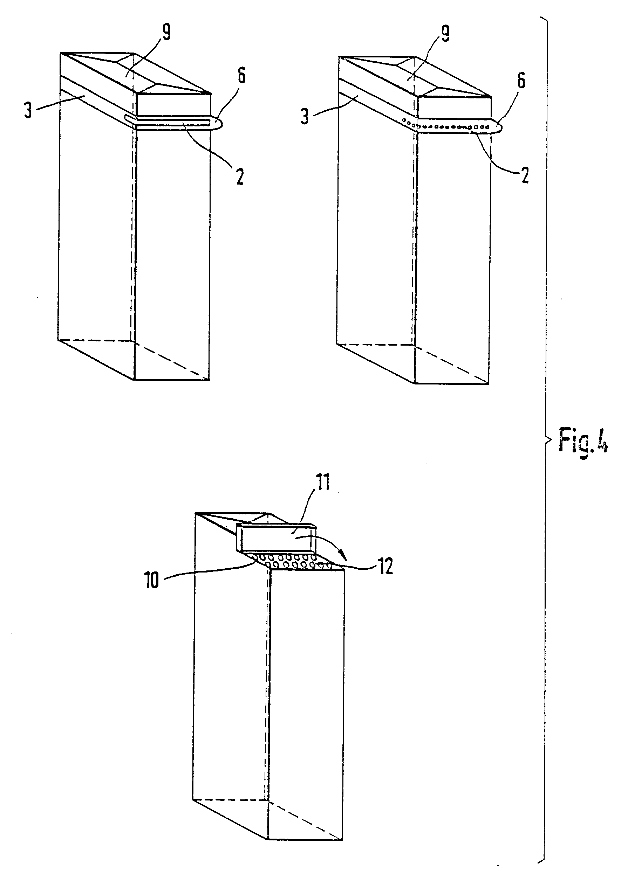

Abbildung 4 zeigt die Zigarettenverpackung selbst. Das Öffnunngsband 3 läuft unterhalb der Stirnseitenfaltung 9 und liegt über dar in gleicher Höhe angebrachten Perforierung 2 oder dam Schlitz 2. Beim Öffnen dar Packung ergreift man den Anfaßzipfel 6 und zieht das Band durch einfaches Abwickeln herunter, wodurch der vorgastanzte Schlitz freigegeben wird. Dann kann an dieser Stelle 10 die Stirnseite dar Packung einfach wie ein Deckel 11 hochgeklappt werden. Die Entnahme dar Zigaretten 12 ist einfach möglich. Durch anschließendes Heruntarklappan des deckelartigen Segments werden die verbleibenden Zigaretten zusätzlich vor dam Herausfallen geschützt.

Grundsätzlich ist auch eine andere Formgebung das Anfaßzipfels durch Modifizierung der Stanzung und Schnittkante möglich. Bevorzugt sind alle kreis- und U-förmigen Ausgestaltungen des Anfaßzipfels.

Grundsätzlich sind alle bekannten thermoplastischen Kunststoffmaterialien für das Öffnungsband geeignet. Bevorzugt besteht das Band im wesentlichen aus Polypropylen oder Polyester, wobei es bavorzugt ist, das Material nur monoaxial (in Längsrichtung das Bandes) zu orientieren. Im allgemeinen ist das Band für den vorgesehenen Verwendungszweck bei Zigarettenverpackungen 2 bis 5 mm breit. Die Breite kann jedoch je nach Einsatzzweck der Öffnungsvorrichtung geeignet gewählt werden.

## Patentansprüche

1. Zigarettenverpackung dadurch gekennzeichnet, daß die Zigarettenverpackung mit einer Einrichtung versehen ist, welche ein auf dar Packung außen aufliegendes Band aus thermoplastischem Kunststoff sowie einen Anfaßzipfel am Ende dieses Bandes umfaßt, wobei das Band fixiert ist und über eine Sollreißstelle in der die Packung bildende Folie läuft, die an der zur Öffnung vorgesehenen Stelle angebracht ist.

2. Zigarettenverpackung nach Anspruch 1, dadurch gekennzeichnet, daß das Band aus thermoplastischem Kunststoff, vorzugsweise Polypropylen, ist.

3. Zigarettenverpackung nach Anspruch 1 und/oder 2, dadurch gekennzeichnet, daß das Band mittels einer haftverrnittelnden Schicht fixiert ist.

4. Zigarettenverpackung nach einem oder mehreren der Ansprüche 1 bis 3, dadurch gekennzeichnet, daß das Band mittels Siegelung fixiert ist.

5. Zigarettenverpackung nach einem oder mehreren der Ansprüche 1 bis 4, dadurch gekennzeichnet, daß der Anfaßzipfel über die Schnittkante des Zuschnitts ausgestanzt wird.

6. Zigarettenverpackung nach einem oder mehreren der Ansprüche 1 bis 5, dadurch gekennzeichnet, daß der Anfaßzipfel aus einer zweistufigen Stanzung hargestellt wird.

7. Öffnungsvorrichtung zum Öffnen von Folienverpackungen aus thermoplastischem Kunststoff, dadurch gekennzeichnet, daß ein auf der Außenseite der Packung aufliegendes Band aus thermoplastischem Kunststoff an seinem Ende mit einem Anfaßzipfel versehen ist und das Band über eine Solleinreißstelle in der die Packung bildenden Folie läuft und fixiert ist.

8. Öffnungsvorrichtung nach Anspruch 7, dadurch gekennzeichnet, daß das Band ein Selbstklebeband ist.

9. Verfahren zur Herstellung einer Öffnungsvorrichtung, dadurch gekennzeichnet, daß die folgenden Verfahrensschritte umfaßt sind:
a) Anbringen einer Solleinreißstelle in der Folie an geeigneter Stelle auf der Außenseite der Packung;
b) Auflegen eines Bandes aus thermoplastischem Kunststoff über die Solleinreißstelle;
c) Fixieren des Bandes;
d) Zuschneiden des Packungszuschnitts mittels einer Schnittkante, welche nicht geradlinig verläuft.

10. Verfahren nach Anspruch 9, dadurch gekennzeichnet, daß das Band ein Selbstklebeband ist.

11. Verfahren nach Anspruch 9, dadurch gekennzeichnet, daß vor oder nach oder mit Anbringen der Solleinreißstelle eine Stanzung angebracht wird, die sich mit der Schnittkante zu einem Anfaßzipfel ergänzt.
